# EUROPÄISCHE PATENTSCHRIFT

(11) **EP 0 468 431 B1**
(45) Veröffentlichungstag und Bekanntmachung des Hinweises auf die Patenterteilung: **08.06.1994**
(21) Anmeldenummer: 91112298.4
(22) Anmeldetag: 23.07.1991
(51) Int. Cl.: B62H 3/02

(54) **Ständer für Fahrräder**
Bicycle holder
Support de bicyclettes

(30) Priorität: 26.07.1990 DE 9011050 U
(43) Veröffentlichungstag der Anmeldung: 29.01.1992
(73) Patentinhaber: EISEN- UND DRAHTWERK ERLAU AKTIENGESELLSCHAFT, D-73431 Aalen (DE)
(72) Erfinder: Müller, Anton, W-7080 Aalen-Unterkochen (DE)
(74) Vertreter: Kohl, Karl-Heinz

(56) Entgegenhaltungen:
- CH-A- 187 569
- DE-U- 8 509 541
- NL-C- 86 855
- US-A- 3 944 079

## Beschreibung

Die Erfindung betrifft einen Ständer für Fahrräder nach dem Oberbegriff des Anspruches 1.

Zum Parken von Fahrrädern ist beispielsweise an Bahnhöfen, Schwimmbädern und dergl. häufig eine Vielzahl von Fahrradständern vorgesehen, an denen die Fahrräder abgestellt und befestigt werden können. Ein solcher bekannter Fahrradständer (DE-A 35 44 286) besteht aus einem vertikalen Stahlpfosten, der im Erdreich verankert ist und ringförmige Elemente bzw. Halteteile aufweist. Sie sind in unterschiedlichen Höhen mit Hülsen und Rohrhalbschalen am Stahlpfosten befestigt. Dieser Fahrradständer ist konstruktiv aufwendig ausgebildet und besteht aus einer Vielzahl von Einzelteilen. Er ist daher aufwendig und teuer in der Herstellung. Da die Halteteile unmittelbar am vertikalen Stahlpfosten befestigt sind, können Rahmenteile des Fahrrades am Ständer anstoßen.

Für Reparatur- und Reinigungsarbeiten an einem Fahrrad ist ein gattungsgemäßer Ständer bekannt (CH-A-187 569), dessen Standbein ebenfalls ein Vertikalrohr ist, in das eine T-förmige Tragstange gesteckt wird. Im Standbein muß diese Tragstange mittels eines Lagers, eines Stützriegels und einer Stellschraube in aufwendiger Weise gesichert werden. Die Herstellung dieser T-förmigen Tragstange ist zudem aufwendig. In den Steg der T-förmigen Tragstange wird das eine Ende eines gebogenen Trägerstückes gesteckt, das in diesen Quersteg mit einem zusätzlichen Einsteckriegel gesichert und gehalten werden muß. Das andere Ende des Trägerstückes trägt die eine Hälfte eines Halteteiles, auf dem mittels einer Flügelmutter ein zweites Klemmstück befestigt wird. Dieser Ständer besteht aus einer Vielzahl von Einzelteilen, die nicht nur die Herstellung erschweren und verteuern, sondern auch zu einer aufwendigen Handhabung führen. Die Befestigung des Fahrrades zwischen den Klemmstücken ist umständlich, da zunächst das Fahrrad mit einer horizontalen Querstange in das eine Klemmstück eingesetzt und anschließend das andere Klemmstück mittels der Flügelmuttern befestigt werden muß. Zur Halterung von Damenfahrrädern, die keine horizontale Querstrebe haben, muß am Fahrrad hilfsweise eine solche Querstrebe befestigt werden, damit das Damenfahrrad am Ständer gehalten werden kann.

Der Erfindung liegt die Aufgabe zugrunde, den gattungsgemäßen Ständer so auszubilden, daß er aus nur wenigen Einzelteilen einfach und preisgünstig hergestellt werden kann und die Arretierung beliebiger Fahrradtypen ermöglicht.

Diese Aufgabe wird beim gattungsgemäßen Ständer erfindungsgemäß mit den kennzeichnenden Merkmalen des Anspruches 1 gelöst.

Der erfindungsgemäße Ständer besteht nur noch aus zwei Teilen, nämlich dem Standbein und dem Halter. Sie sind konstruktiv einfach ausgebildete Teile, die sich kostengünstig fertigen lassen und eine problemlose Handhabung des erfindungsgemäßen Ständers ermöglichen. Da das Standrohr am oberen Ende im wesentlichen rechtwinklig abgebogen ist, wird auf konstruktiv einfache Weise erreicht, daß sich der Halter mit dem Klemmteil in einem solchen Abstand vom Standbein befindet, daß Rahmenteile des Fahrrades nicht am Ständer anstoßen können. Da die Klemmöffnung nach außen offen ist, läßt sich das Mittel- oder Sitzrohr des Fahrrades über die Einführöffnung leicht in die Klemmöffnung einsetzen, in der das Mittel- oder Sitzrohr zuverlässig durch Klemmung gehalten wird. Am Halter können unterschiedliche Fahrradtypen einfach gehalten werden. Der erfindungsgemäße Ständer zeichnet sich somit außer durch eine konstruktiv einfache Ausbildung und eine entsprechend kostengünstige Fertigung auch durch eine einfache Handhabung aus. Ferner läßt sich der Ständer einfach im untergrund befestigen, da das Standbein hierzu nur im Boden verankert werden muß.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:
- Fig. 1: einen erfindungsgemäßen Ständer für Fahrräder in schematischer Darstellung,
- Fig. 2: die Einzelheit A in Fig. 1 in vergrößerter Darstellung,
- Fig. 3: einen Halter des Ständers nach Fig. 1 in Ansicht gemäß Pfeil III in Fig. 2,
- Fig. 4: den Halter nach Fig. 3 in Ansicht gemäß Pfeil IV in Fig. 3,
- Fig. 5 und 6: einen Schnitt längs der Linie V-V bzw. VI-VI in Fig. 3,
- Fig. 7: in schematischer Darstellung und in Seitenansicht den Ständer nach Fig. 1 mit daran befestigtem Fahrrad,
- Fig. 8: den Ständer mit dem Fahrrad gemäß Fig. 7 in Ansicht gemäß Pfeil VIII in Fig. 7,
- Fig. 9: den Ständer mit dem Fahrrad gemäß den Fig. 7 und 8 in Draufsicht.

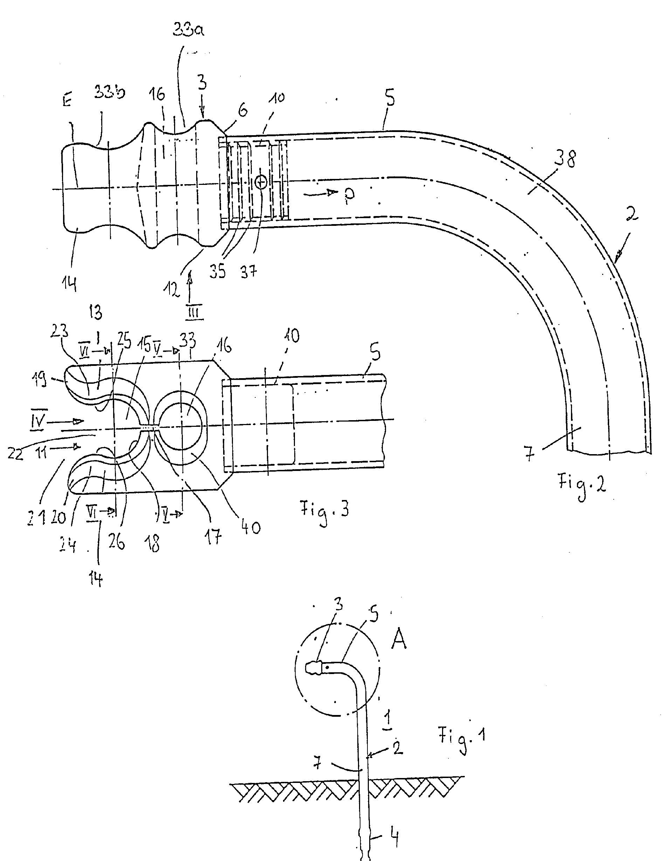

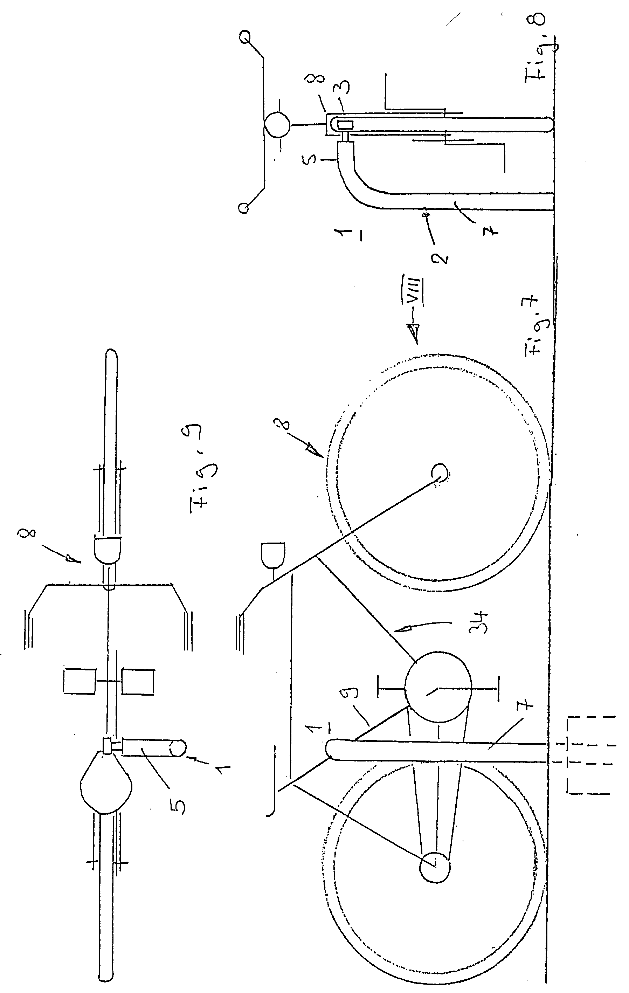

Fig. 1 zeigt einen Ständer 1, der im Boden verankert ist und an dem ein Fahrrad abgestellt und gehalten werden kann, wie in den Fig. 7 bis 9 dargestellt ist.

Der Ständer 1 hat einen vorzugsweise durch ein L-förmig gekrümmtes Rohr 2 gebildeten Träger, der als Standbein vorgesehen ist und einen Halter 3 trägt, an dem ein Fahrrad 8 (Fig. 7 bis 9) mit seinem Mittel- bzw. Sitzrohr 9 befestigt werden kann. Das Rohr 2 wird mit seinem längeren Vertikalschenkel 7 im Boden verankert. Der kürzere Schenkel 5 des Trägers 2 verläuft horizontal und hat eine Länge, die etwa einem Viertel der Länge des längeren Schenkels 7 entspricht. Das freie Ende 4 des längeren Schenkels 7 ist zur besseren Verankerung im Boden vorzugsweise profiliert ausgebildet, beispielsweise mit Rillen, Verdickungen und dgl. versehen. In das freie Ende 6 des Rohrschenkels 5 ist der Halter 3 mit einem Ansatz 10 gesteckt. Er ist am Umfang vorteilhaft mit Hemmlippen 35 in Form von über seinem Umfang verlaufenden Erhöhungen versehen. Dadurch kann der Halter 3 einfach in den Rohrschenkel 5 gepreßt werden. Zusätzlich oder auch anstelle der Erhöhungen kann der Ansatz 10 im Rohrschenkel 5 mit einem Sicherungsteil 37 gesichert sein, der den Ansatz 10 und den Rohrschenkel 5 durchsetzt. Der Halter 3 kann einfach ausgetauscht werden.

Der Ansatz 10 des Halters 3 steht von einem Klemmteil 12 ab, das zwei einander gegenüberliegende Klemmschenkel 13 und 14 (Fig. 3 bis 6) aufweist. Sie begrenzen eine Klemmaufnahme 15, in die das Mittelrohr 9 des Fahrrades 8 zur Lagesicherung des Fahrrades gedrückt wird.

Die Klemmschenkel 13, 14 reichen über etwa die halbe Länge des Klemmteiles 12, das in seiner anderen, an den Ansatz 10 anschließenden Hälfte eine Durchziehöffnung 16 für ein Sicherungsteil, wie eine Kette, ein Seil oder dgl., zum Verbinden mit dem Fahrrad 8 hat. Die Klemmaufnahme und die Durchziehöffnung 16 sind über einen Schlitz 17 miteinander verbunden, der sich über die ganze Breite und parallel zu den Klemmschenkeln 13, 14 erstreckt. Der Schlitz 17 mündet am Boden 18 der Klemmaufnahme 15.

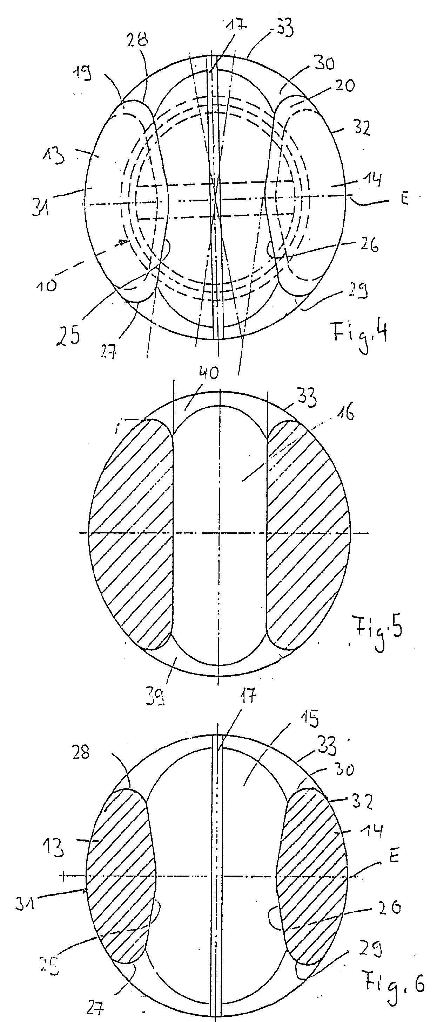

Die freien Enden 19, 20 der Klemmschenkel 13, 14 verjüngen sich nach außen und begrenzen eine Einführöffnung 21, die sich in Richtung auf den Boden 18 der Klemmaufnahme 15 verengt und über eine Verengung 22 in die Klemmaufnahme 15 übergeht. Die Verengung 22 ist durch nockenartige Verbreiterungen 23, 24 an den einander zugewandten Seiten 25 und 26 der Klemmschenkel 13, 14 gebildet (Fig. 3). Die die Klemmaufnahme 15 und die Einführöffnung 21 begrenzenden Innenseiten 25, 26 der Klemmschenkel 13, 14 verlaufen in Einführrichtung 11 des Mittelrohres 9 des Fahrrades 8 jeweils S-förmig gekrümmt. Die Innenseiten 25, 26 der Klemmschenkel 13, 14 sind, in Einführrichtung 11 gesehen, im Querschnitt jeweils dachförmig ausgebildet (Fig. 4 und 6). Im Bereich der den Schlitz 17 senkrecht kreuzenden Längsmittelebene E (Fig. 4 und 6) des Halters 3 haben die Klemmaufnahme 15 und die Einführöffnung 21 darum die kleinste lichte Weite. Beiderseits der Längsmittelebene E verbreitern sich die Klemmaufnahme 15 und die Einführöffnung 21 infolge der dachförmigen Ausbildung der einander zugewandten Innenseiten 25 und 26 der Klemmschenkel 13, 14. Die Innenseiten 25, 26 gehen über abgerundete schmale Randabschnitte 27 bis 30 in die voneinander abgewandten Außenseiten 31, 32 der Klemmschenkel 13, 14 über. Die Außenseiten 31, 32 liegen in einer Außenseite 33 des Halters 3 (Fig. 4 bis 6). Durch die dachförmige Ausbildung der Innenseiten 25, 26 liegen die Klemmschenkel 13, 14 beim Hineindrücken des Mittel- bzw. Sitzrohres 9 des Fahrrades 8 in die Klemmaufnahme 15 und auch bei eingeschobenem Sitzrohr 9 nur mit Linienberührung an ihm an. Dadurch wird das Sitzrohr des Fahrrades 8 in hohem Maße vor Beschädigung geschützt. Außerdem ist dadurch gewährleistet, daß sich das Sitzrohr mit relativ geringem Kraftaufwand in die Klemmaufnahme eindrücken bzw. aus ihm herausziehen läßt.

Der Übergang 39, 40 von der Durchziehöffnung 16 in die Außenseite 33 des Halters 3 ist abgerundet (Fig. 5), so daß eine Sicherungskette oder Sicherungsseil bequem durch die Durchziehöffnung 16 gezogen werden kann.

Wie Fig. 2 zeigt, hat der Halter 3 in seinem die Durchziehöffnung 16 aufweisenden Bereich größere Höhe als in dem die Klemmschenkel 13, 14 enthaltenden Bereich. Die in Richtung der Achse der Durchziehöffnung 16 einander gegenüberliegenden Bereiche 33a und 33b der Außenseite 33 des Halters sind gemäß Fig. 2 jeweils konkav ausgebildet.

Die einander zugewandten noppenartigen Verbreiterungen 23, 24 der Klemmschenkel 13, 14 bilden Schikanen, die beim Eindrücken des schräg zum Fahrradrahmen 34 (Fig. 7) verlaufenden Mittel- bzw. Sitzrohres 9 unter elastischer Verformung der Klemmschenkel 13, 14 überwunden werden müssen. In Raststellung liegt das Sitzrohr 9 am Boden 18 der Klemmaufnahme 15 und an den Schenkeln 13, 14 an. In dieser Lage ist das Fahrrad 8 sicher am Ständer 1 gehalten, so daß es selbst ohne zusätzliche Sicherung durch eine Kette, ein Seil oder dgl. nicht umkippen kann. Die lichte Weite der Klemmaufnahme 15 ist vorteilhaft kleiner als der Durchmesser des Sitzrohres 9 des Fahrrades 8, so daß die Klemmschenkel 13, 14 unter Vorspannung am Mittel- bzw. Sitzrohr 9 anliegen und auf diese Weise das Fahrrad 8 spielfrei halten.

Durch den sich über die ganze Breite des Halters 3 erstreckenden Schlitz 17 lassen sich die Klemmschenkel 13, 14 beim Einpressen des Mittel- bzw. Sitzrohres 9 leicht elastisch auseinanderdrücken, so daß das Sitzrohr mit geringem Kraftaufwand am Ständer 1 arretiert werden kann.

Infolge der dachförmig verlaufenden Innenseiten 25, 26 der Klemmschenkel 13, 14 verengt sich die Einführöffnung 21 und die Klemmaufnahme 15 quer zur Einführrichtung 11 von beiden Seiten aus. Beim Eindrücken des Mittel- bzw. Sitzrohres 9 des Fahrrades 8 findet infolge des S-förmigen Verlaufes der Klemmschenkel 13, 14 und der dachförmigen Ausbildung ihrer Innenseiten 25, 26 nur eine Linienberührung zwischen dem Mittelrohr und den Klemmschenkeln statt, unabhängig davon, von welcher Seite aus das Mittelrohr 9 zwischen die Klemmschenkel 13, 14 gedrückt wird.

Der Übergang zwischen den stumpfwinklig zueinander liegenden Abschnitten der Schenkelinnenseiten 25, 26 ist vorteilhaft abgerundet, so daß sich das Mittelrohr 9 problemlos in die Klemmaufnahme 15 drücken läßt.

Vorzugsweise besteht der Halter 3 aus Kunststoff, der eine kostengünstige Fertigung erlaubt und nicht korrodiert. Der Träger bzw. das Rohr 2 besteht vorteilhaft aus korrosionsbeständigem Stahl, so daß es auch bei ungünstigen Witterungsbedingungen eine lange Lebensdauer aufweist.

Damit am Ständer 1 jedes beliebige Fahrrad 8 geparkt werden kann, hat das Bogenstück 38 zwischen den Rohrschenkeln 5 und 7 relativ großen Krümmungsradius, so daß der Rohrschenkel 5 weit vom Rohrschenkel 7 absteht. Dadurch können beliebige Fahrräder mit ihrem Mittel- bzw. Sitzrohr 9 in den Halter 3 eingepreßt werden, ohne daß das Sitzrohr oder andere Rahmenteile des Fahrrades am vertikalen Rohrschenkel 7 anstoßen. Auch müssen Pedale des Fahrrades 8 nicht in eine bestimmte Stellung gebracht werden, um nicht am Rohr bzw. Träger anzustoßen.

Sobald das Mittelrohr 9 in der Klemmaufnahme 15 sitzt und von den Klemmschenkeln 13, 14 umfaßt wird, ist das Fahrrad 8 einwandfrei gesichert und kann nicht mehr umkippen. Zusätzlich kann als Diebstahlssicherung eine Sicherungskette, ein Seil oder dgl. durch die Durchziehöffnung 16 gezogen und am jeweiligen Fahrradrahmenteil befestigt werden.

## Patentansprüche

1. Ständer für Fahrräder, mit einem aufwärts ragenden Standbein (2) und mit mindestens einem mit Abstand neben dem Standbein (2) angeordneten Halter (3), der ein Klemmteil (12) hat, das am Standbein (2) gehalten ist,
dadurch gekennzeichnet, daß der Ständer nur aus dem Halter (3) und dem Standbein (2) besteht, das im Erdreich verankert wird, und daß das Standbein (2) mit einem im wesentlichen rechtwinklig abgebogenen Ende (5) ausgebildet ist, an dem der Halter (3) vorgesehen ist, und daß das Klemmteil (12) Klemmschenkel (13, 14) hat, die eine Einführöffnung (21) und eine Klemmöffnung (15) zum Hineindrücken und Herausziehen eines Fahrrad-Mittel- oder Sitzrohres (9) aufweisen.

2. Ständer nach Anspruch 1,
dadurch gekennzeichnet, daß der Halter (3) mit einem Steckteil (10) in das abgewinkelte Ende (5) des Standbeines (2) gesteckt ist.

3. Ständer nach Anspruch 1 oder 2,
dadurch gekennzeichnet, daß der Halter (3) aus Kunststoff besteht.

4. Ständer nach einem der Ansprüche 1 bis 3,
dadurch gekennzeichnet, daß die freien Ende (19, 20) der Klemmschenkel (13, 14) verjüngt ausgebildet sind.

5. Ständer nach einem der Ansprüche 1 bis 4,
dadurch gekennzeichnet, daß der Übergang von der Einführöffnung (21) in die Klemmöffnung (15) verengt ausgebildet ist.

6. Ständer nach einem der Ansprüche 1 bis 5,
dadurch gekennzeichnet, daß die Klemmschenkel (13, 14) im Bereich zwischen der Einführöffnung (21) und der Klemmöffnung (15) liegende nockenartige Verbreiterungen (23, 24) aufweisen.

7. Ständer nach einem der Ansprüche 1 bis 6,
dadurch gekennzeichnet, daß der Halter (3) am Boden (18) der Klemmöffnung (15) einen Schlitz (17) aufweist, der die Klemmaufnahme (18) mit einer Durchziehöffnung (16) für ein Diebstahlsicherungsteil, wie eine Kette, ein Drahtseil oder dergl., verbindet.

8. Ständer nach einem der Ansprüche 1 bis 7,
dadurch gekennzeichnet, daß zur Befestigung des Halters (3) am abgewinkelten Ende (5) des Standbeines (2) ein Sicherungsteil (37), wie ein Querstift, ein Splint oder dergl., vorgesehen ist.

9. Ständer nach einem der Ansprüche 2 bis 8,
dadurch gekennzeichnet, daß das Steckteil (10) in Längsrichtung mit Abstand hintereinander liegende Klemmlippen (35) aufweist.

10. Ständer nach einem der Ansprüche 2 bis 9,
dadurch gekennzeichnet, daß das Steckteil (10) mit Preßsitz im Standbeinende (5) gehalten ist.

11. Ständer nach einem der Ansprüche 1 bis 10,
dadurch gekennzeichnet, daß die einander zugewandten Innenseiten (25, 26) der Klemmschenkel (13, 14) quer zu ihrer Längsrichtung im Schnitt dachförmig ausgebildet sind, derart, daß sich die Einführöffnung (21) und die Klemmöffnung (15) von einer Längsmittelebene (E) des Halters (3) aus nach außen erweitern.

12. Ständer nach einem der Ansprüche 1 bis 11,
dadurch gekennzeichnet, daß die einander zugewandten Innenseiten (25, 26) der Klemmschenkel (13, 14) in deren Längsrichtung S-förmig verlaufen.

## Claims

1. A bicycle stand comprising a standing leg (2) projecting upwards and comprising at least one holder (3) arranged next to the standing leg (2) at a distance therefrom, the said holder (3) having a clamping part (12) which is held on the standing leg (2), characterised in that the stand consists only of the holder (3) and the standing leg (2) which is anchored in the ground, in that the standing leg (2) is formed with one end (5) bent substantially at right-angles and the holder (3) is provided on the said end (5), and in that the clamping part (12) has clamping arms (13, 14) which have an insertion opening (21) and a clamping opening (15) for pushing in and withdrawing a centre tube or seat tube (9) of a bicycle.

2. A stand according to claim 1, characterised in that an insertion part (10) of the holder (3) is inserted into the angled end (5) of the standing leg (2).

3. A stand according to claim 1 or 2, characterised in that the holder (3) is made of plastics material.

4. A stand according to any one of claims 1 to 3, characterised in that the free ends (19, 20) of the clamping arms (13, 14) are tapered.

5. A stand according to any one of claims 1 to 4, characterised in that the transition region between the insertion opening (21) and the clamping opening (15) is narrowed.

6. A stand according to any one of claims 1 to 5, characterised in that the clamping arms (13, 14) have cam-type broadened portions (23, 24) located in the region between the insertion opening (21) and the clamping opening (15).

7. A stand according to any one of claims 1 to 6, characterised in that the holder (3) has a slot (17) at the base (18) of the clamping opening (15), the said slot (17) connecting the clamping seat (18) to a draw-through opening (16) for an anti-theft device such as a chain, a wire rope or the like.

8. A stand according to any one of claims 1 to 7, characterised in that a securing element (37), such as a cotter pin, a split-pin or the like, is provided on the angled end (5) of the standing leg (2) in order to fasten the holder (3).

9. A stand according to any one of claims 2 to 8, characterised in that the insertion part (10) has clamping lips (35) spaced apart one behind the other in the longitudinal direction.

10. A stand according to any one of claims 2 to 9, characterised in that a press fit is used to hold the insertion part (10) in the end (5) of the standing leg.

11. A stand according to any one of claims 1 to 10, characterised in that the facing inner surfaces (25, 26) of the clamping arms (13, 14) are roof-shaped in section transversely to their longitudinal direction such that the insertion opening (21) and the clamping opening (15) expand outwards from a longitudinal central plane (E) of the holder (3).

12. A stand according to any one of claims 1 to 11, characterised in that the facing inner surfaces (25, 26) of the clamping arms (13, 14) extend in an S-shaped manner in their longitudinal direction.

## Revendications

1. Support pour bicyclettes, comprenant un pied (2) et au moins une pince (3) disposée à distance latéralement au pied (2) et possèdant une partie de serrage (12), et qui est solidaire du pied (2),
caractérisé en ce que le support est composé exclusivement de la pince (3) et du pied (2), lequel peut être ancré dans le sol, et en ce que le pied (2) est réalisé avec une extrémité (5) recourbée sensiblement à angle droit, à laquelle la pince (3) est prévue, et en ce que la partie de serrage (12) possède des branches de serrage (13, 14) qui présentent une ouverture d'introduction (21) et une ouverture de serrage (15) servant à permettre d'emboîter et d'extraire un tube central ou de selle (9) de la bicyclette.

2. Support selon la revendication 1,
caractérisé en ce que la pince (3) est emboîtée dans l'extrémité coudée (5) du pied (2) par une partie d'emboîtement (10).

3. Support selon la revendication 1 ou 2,
caractérisé en ce que la pince (3) est composée de matière plastique.

4. Support selon une des revendications 1 à 3,
caractérisé en **c**e que les extrémités libres (19, 20) des branches de serrage (13, 14) sont d'une forme amincie.

5. Support selon une des revendications 1 à 4,
caractérisé en ce que la transition entre l'ouverture d'introduction (21) et l'ouverture de serrage (15) est de configuration rétrécie.

6. Support selon une des revendications 1 à 5,
caractérisé en ce que les branches de serrage (13, 14) présentent des renflements en forme de bossages (23, 24) dans la région comprise entre l'ouverture d'introduction (21) et l'ouverture de serrage (15).

7. Support selon une des revendications 1 à 6,
caractérisé en ce que la pince (3) présente, au fond (18) de l'ouverture de serrage (15), une fente (17) qui relie le logement de serrage (18) à une ouverture de passage (16) prévue pour un élément de sécurité antivol tel qu'une chaîne, un câble ou équivalent.

8. Support selon une des revendications 1 à 7,
caractérisé en ce que, pour la fixation de la pince (3) sur l'extrémité coudée (5) du pied (2), il est prévu un élément de sécurité (37) tel qu'une goupille transversale, une goupille fendue ou analogue.

9. Support selon une des revendications 2 à 8,
caractérisé en ce que la partie d'emboîtement (10) présente des nevures de serrage (35) qui sont situées les unes derrière les autres à un certain écartement dans la direction longitudinale.

10. Support selon une des revendications 2 à 9,
caractérisé en ce que la partie d'emboîtement (10) est tenue dans l'extrémité (5) du pied par emmanchement à serrage.

11. Support selon une des revendications 1 à 10,
caractérisé en ce que les côtés intérieurs (25, 26) des branches de serrage (13, 14) qui sont dirigés l'un vers l'autre sont en forme de toit, dans une vue en coupe transversalement à leur direction longitudinale, de sorte que l'ouverture d'introduction (21) et l'ouverture de serrage (15) s'élargissent vers l'extérieur à partir d'un plan longitudinal médian (E) de la pince (3).

12. Support selon une des revendications 1 à 11,
caractérisé en ce que les côtés intérieurs (25, 26) des branches de serrage (13, 14) qui sont dirigés l'un vers l'autre s'étendent en forme de S dans leur direction longitudinale.
